# DEMANDE DE BREVET EUROPEEN

(11) **EP 4 678 074 A1**
(43) Date de publication de la demande: **14.01.2026**
(21) Numéro de dépôt: 25171443.2
(22) Date de dépôt: 18.04.2025
(51) Int. Cl.: A47J 31/44, A47J 31/58

(54) **APPAREIL DE PREPARATION DE BOISSONS COMPRENANT UN SUPPORT DE RECIPIENT AMELIORE**

(30) Priorité: 09.07.2024 FR 2407503
(71) Demandeur: SEB S.A., 69130 Ecully (FR)
(72) Inventeur: DUTERTRE, Thierry, 69134 ECULLY CEDEX (FR); VAUGEOIS, Sylvain, 69134 ECULLY CEDEX (FR)
(74) Mandataire: SEB Développement

(57) **Abrégé**

Cet appareil de préparation de boissons (10) comprend une pompe de circulation de liquide, une chambre d'infusion, une tête de distribution de boissons (14) et un support de récipient (18) comportant :
+ une partie de support définissant une surface de réception (40) d'un récipient configurée pour être située au moins en partie en-dessous de la tête de distribution de boissons (14), et
+ un réservoir de collecte configuré pour être situé au moins en partie en-dessous de la partie de support.

La surface de réception (40) du récipient est en un matériau configuré pour assurer un maintien du récipient en position sur la surface de réception (40) lors du fonctionnement de la pompe.

## Description

### Domaine technique

La présente invention se rapporte au domaine des appareils de préparation de boissons avec support de récipient configuré pour recevoir un récipient tel une tasse et collecter des eaux usagées/de rinçage et/ou des gouttes de boisson s'écoulant d'une tête de distribution de boissons de l'appareil. L'invention se rapporte notamment aux machines à café équipées d'un bac de récupération également appelé « drip-tray ».

### Etat de la technique

Il est connu de EP2459035 A1 un appareil de préparation de boissons équipé d'une pompe de circulation de liquide et d'un support de récipient muni de moyens de réduction des vibrations dues au fonctionnement de la pompe. Dans ce document, les moyens de réduction des vibrations comprennent une pièce de coopération avec un plan de travail sur lequel est positionné l'appareil, permettant de dissocier le support de récipient du châssis de l'appareil et ainsi de limiter la transmission des vibrations de la pompe au support de récipient et au récipient.

Une telle configuration permet notamment d'éviter qu'un récipient positionner sur le support puisse vibrer et éventuellement que du liquide puisse tomber du récipient lors de ces vibrations.

Cependant, l'appareil de préparation de boissons et notamment le support de récipient proposé dans EP2459035 A1 a une structure complexe car il est nécessaire de complexifier l'architecture de l'appareil pour autoriser un contact entre le support de récipient et le plan de travail sur lequel repose l'appareil. En outre, un tel agencement ne semble pas permettre de réduire totalement l'impact des vibrations et donc d'empêcher un éventuel déplacement du récipient sur le support de récipient lors du fonctionnement de la pompe sous l'effet des vibrations.

### Résumé de l'invention

La présente invention vise à remédier à ces inconvénients.

Le problème technique à la base de l'invention consiste à proposer un appareil de préparation de boissons de structure simplifiée et permettant de limiter l'impact des vibrations dues au fonctionnement de la pompe de circulation de liquide et notamment d'empêcher tout déplacement d'un récipient positionner sur le support de récipient lors du fonctionnement de la pompe et donc lors de la réalisation d'une boisson.

A cet effet, l'invention a pour objet un appareil de préparation de boissons comprenant :
- une pompe de circulation de liquide,
- une chambre d'infusion configurée pour contenir de la mouture, telle que de la mouture de café ou tout autre produit pulvérulent à infuser,
- une tête de distribution de boissons configurée pour être reliée fluidiquement à la chambre d'infusion et par laquelle une boisson confectionnée par l'appareil de préparation de boissons est apte à s'écouler hors de l'appareil de préparation de boissons,
- un support de récipient, le support de récipient comportant :
   + une partie de support définissant une surface de réception d'un récipient configurée pour supporter le récipient et pour être située au moins en partie en-dessous de la tête de distribution de boissons, de telle sorte qu'une boisson confectionnée par l'appareil de préparation de boissons est apte à s'écouler par gravité dans le récipient supporté par la partie de support, et
   + un réservoir de collecte configuré pour être situé au moins en partie en-dessous de la partie de support et pour collecter de l'eau de rinçage et/ou des gouttes de boisson s'écoulant par gravité depuis la tête de distribution de boissons et passant à travers au moins un orifice d'écoulement formé au travers de la partie de support.

Conformément à l'invention, la surface de réception du récipient est en un matériau configuré pour assurer un maintien du récipient en position sur la surface de réception lors du fonctionnement de la pompe.

Grâce à l'invention, le récipient est maintenu en position sur la surface de réception lors du fonctionnement de la pompe. En effet, le matériau de la surface de réception garanti une adhérence entre le récipient et le support de récipient qui empêche tout déplacement du récipient lorsqu'il est positionné sur la surface de réception et que la pompe est en fonctionnement. Une telle solution est simple, peu coûteuse à mettre en œuvre et efficace pour éviter un déplacement du récipient qui pourrait empêcher la réalisation correct d'une boisson. Un tel déplacement pourrait notamment conduire à verser de la boisson à côté du récipient suite au déplacement du récipient sous l'effet des vibrations de la pompe, voire entrainer un renversement du récipient. Une telle configuration est particulièrement avantageuse lorsqu'un dispositif de distribution de lait moussé est associé à l'appareil de préparation de boissons et destiné, en complément de la tête de distribution de boissons, à distribuer du lait moussé dans le récipient.

Selon des aspects avantageux mais non obligatoires de l'invention, un tel appareil de préparation de boissons peut incorporer une ou plusieurs des caractéristiques suivantes, prises dans toute combinaison techniquement admissible.

Selon une caractéristique avantageuse de l'invention, la surface de réception est en matériau dont le coefficient de frottement statique avec le récipient est supérieur à 1, de préférence supérieur à 2 de préférence encore supérieur à 3.

Un tel agencement permet d'assurer une adhérence optimisée entre le récipient et la surface de réception de sorte que le récipient reste immobile sur la surface de réception lors de la réalisation d'une boisson et notamment lors du fonctionnement de la pompe. En outre, cela permet de réduire les vibrations du récipient sur la surface de réception lors du fonctionnement de la pompe et ainsi de réduire les éventuels bruits liés à de telles vibrations.

Selon une caractéristique avantageuse de l'invention, la surface de réception est en matériau élastomère.

Un tel agencement permet d'assurer de manière simplifiée et peu couteuse le maintien en position du récipient sur la surface de réception et la réduction des vibrations du récipient liées au fonctionnement de la pompe.

Selon une caractéristique avantageuse de l'invention, la partie de support comprend une plaque de support dans laquelle est ménagé chaque orifice d'écoulement et un élément de support formant la surface de réception et propre à être fixé à la plaque de support.

Un tel agencement permet de simplifier la structure de la partie de support et notamment d'avoir une architecture en deux pièces de matériaux différents, à savoir un matériau dédié à l'interaction avec le reste du support de récipient et un matériau dédié à l'interaction avec le récipient. En outre, un tel agencement permet d'améliorer la qualité perçu avec un matériau plutôt métallique pour la plaque de support et un matériau ayant des caractéristique d'adhérence optimisée pour l'élément de support.

Selon une caractéristique avantageuse de l'invention, l'élément de support est fixé de manière amovible à la plaque de support

Un tel agencement permet de faciliter le nettoyage de la partie de support en séparant l'élément de support de la plaque de support.

Selon une caractéristique avantageuse de l'invention, la plaque de support comprend au moins un logement traversant et l'élément de support comprend au moins une nervure axiale correspondante pour chaque logement traversant propre à être reçue dans ledit logement traversant.

Un tel agencement permet de faciliter l'association de l'élément de support à la plaque de support et avantageusement de mettre l'élément de support en contact avec le récipient via la ou les nervures axiales. Le contact entre l'élément de support et le récipient est ainsi assuré.

Selon une caractéristique avantageuse de l'invention, chaque nervure axiale est propre à coopérer par coopération de forme avec le logement traversant correspondant pour fixer l'élément de support à la plaque de support.

Un tel agencement permet de faciliter la fixation de l'élément de support à la plaque de support et également la séparation de l'élément de support et de la plaque de support pour réaliser un nettoyage de la partie de support.

Selon une caractéristique avantageuse de l'invention, l'élément de support comprend une partie de liaison sensiblement plane sur laquelle est formée chaque nervure axiale, la partie de liaison est configurée pour être positionnée sous la plaque de support et chaque nervure axiale est configurée pour traverser le logement traversant correspondant et former la surface de réception lorsque l'élément de support est fixé à la plaque de support.

Un tel agencement permet d'assurer le contact entre le récipient et l'élément de support via la ou les nervures axiales et ainsi de garantir une adhérence optimisée du récipient sur la surface de réception. En outre, la plaque de support joue le rôle d'habillage du support de récipient et vient recouvrir la partie de liaison.

Selon une caractéristique avantageuse de l'invention, chaque nervure axiale est configurée pour dépasser axialement de la plaque de support et notamment du logement traversant correspondant lorsque l'élément de support est fixé à la plaque de support de sorte à définir une aire de réception du récipient surélevée par rapport à la plaque de support

Un tel agencement permet de définir une surface de réception du récipient surélevée par rapport à la plaque de support et ainsi d'éviter toute dégradation/usure de la surface supérieure de la plaque de support par le récipient lors du positionnement du récipient sur le support de récipient. En outre, cela permet d'assurer un contact entre le récipient et le support de récipient uniquement via la ou les nervures axiales et ainsi d'optimiser le maintien du récipient en position sur le support de récipient notamment lors de la réalisation d'une boisson à l'aide de l'appareil de préparation de boissons.

Selon une caractéristique avantageuse de l'invention, l'élément de support comprend plusieurs nervures axiales, et l'élément de support comprend :
- une partie centrale comprenant un premier groupe de nervures axiales s'étendant parallèlement à un axe transversal de l'élément de support, et
- deux parties latérales opposées comprenant un deuxième groupe de nervures axiales comprenant successivement, selon l'axe transversal, une première portion s'étendant parallèlement à l'axe transversal et une deuxième portion inclinée par rapport à la première portion et dont une extrémité libre est plus proche de la partie centrale que la première portion.

Un tel agencement permet d'optimiser la surface de contact entre les nervures axiales et le récipient et ainsi d'assurer un maintien optimisé du récipient.

Selon une caractéristique avantageuse de l'invention, la deuxième portion est plus proche de la tête de distribution de boissons que la première portion suivant l'axe transversal.

Selon une caractéristique avantageuse de l'invention, le support de récipient comprend un capot propre à être fixé au réservoir de collecte et définissant un logement central de réception de la plaque de support.

Un tel agencement permet de simplifier la fixation de la plaque de support au support de récipient.

Selon une caractéristique avantageuse de l'invention, le capot est propre à être superposé au réservoir de collecte et définit un bac de récupération de l'eau de rinçage et/ou des gouttes de boisson s'écoulant par gravité depuis la tête de distribution de boissons, le bac de récupération étant propre à être en communication fluidique avec le réservoir de collecte, et la plaque de support est propre à être superposée au capot au niveau du logement central.

Un tel agencement permet de simplifier la structure du support de récipient et d'assurer un désassemblage aisé de celui-ci et donc un nettoyage facilité des différentes pièces le composant.

Selon une caractéristique avantageuse de l'invention, l'élément de support comprend une languette de préhension propre à être saisie par l'utilisateur pour séparer l'élément de support de la plaque de support.

Un tel agencement permet de simplifier la séparation de l'élément de support de la plaque de support et ainsi de faciliter les opérations de nettoyage.

Selon une caractéristique avantageuse de l'invention, l'appareil de préparation de boissons comprend une sortie de distribution d'eau chaude/vapeur et un dispositif de distribution de lait moussé propre à être connecté à la sortie de distribution d'eau chaude/vapeur et à délivrer du lait moussé dans le récipient lorsque le récipient est positionné sur la surface de réception.

Un tel agencement permet de pouvoir réaliser des boissons à base de lait moussé et de garantir le positionnement du récipient par rapport à la tête de distribution de boissons et au dispositif de distribution de lait moussé lors de la réalisation de boissons à base de lait moussé et de café. Cela permet notamment que le récipient reste immobile tout au long de la réalisation de la boisson à l'aplomb des sorties de liquide de la tête de distribution de boissons et du dispositif de distribution de lait moussé.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une machine à café à laquelle est associé un dispositif de distribution de lait moussé et comprenant un support de récipient conforme à un mode de réalisation de l'invention ;
La figure 2 est une vue en perspective de dessus du support de récipient de la figure 1 ;
La figure 3 est une vue en éclaté du support de récipient des figures 1 et 2 ;
La figure 4 est une vue en perspective de dessous d'un capot du support de récipient des figures 1 à 3 ;
La figure 5 est une vue en perspective de face d'une partie de support du support de récipient des figures 1 à 4;
La figure 6 est une vue en perspective de dessous de la partie de support de la figure 5;

Seuls les éléments nécessaires à la compréhension de l'invention ont été représentés. Pour faciliter la lecture des dessins, les mêmes éléments portent les mêmes références d'une figure à l'autre.

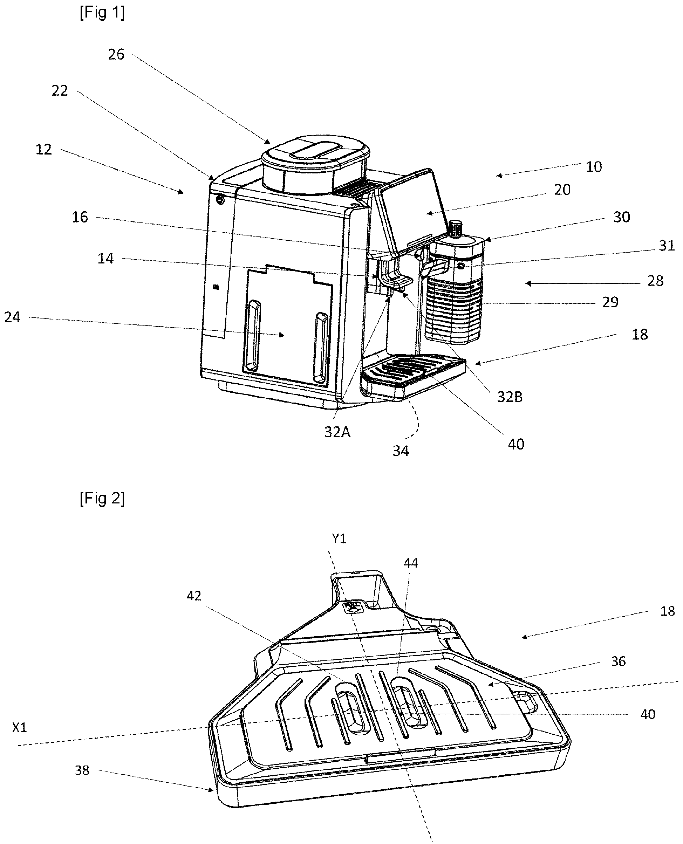

On notera que dans ce document, les termes « horizontal », « vertical », « inférieur », « supérieur », « haut », « bas », « avant », « arrière », « longitudinal », « transversal », employés pour décrire le support de récipient font référence à ce dispositif en situation d'usage, notamment lorsqu'il est installé dans/ fixé à un appareil de préparation de boissons, tel la machine à café de la figure 1 ,de sorte qu'un récipient positionné sur le support de récipient est propre à recevoir une boisson préparée à l'aide de l'appareil de préparation de boissons.

En outre, les termes « interne » et « externe » ou « intérieur » et extérieur » sont définis par rapport à un volume interne du support de récipient destiné à recevoir de l'eau de rinçage et/ou des gouttes de boisson s'écoulant par gravité depuis une tête de distribution de boissons de l'appareil de préparation de boissons. Un élément ou une face interne ou intérieur est positionné en regard du volume interne tandis qu'un élément ou une face externe ou extérieur est situé en regard de l'extérieur au volume interne.

De plus les termes « droit » et « gauche » employés pour décrire le support de récipient font référence à ce dispositif en situation d'usage lorsque l'utilisateur est positionné face à l'appareil de préparation de boissons et le support de récipient est situé en regard de l'utilisateur.

L'appareil de préparation de boissons représenté à la figure 1 est une machine à café 10. En variante, l'appareil de préparation de boissons est une machine de préparation d'eau chaude ou de thé.

Dans la suite de la description les termes appareil de préparation de boissons et machine à café sont utilisés indifféremment l'un de l'autre.

La machine à café 10 est avantageusement une machine à café automatique.

La machine à café 10 comporte un bâti ou boitier 12, une tête de distribution de boissons 14 et une sortie de distribution d'eau chaude/vapeur 16.

La machine à café 10 comprend également un support de récipient 18 sur lequel un contenant/récipient, non représenté, peut être disposé.

La machine à café 10 comprend avantageusement une interface homme machine 20 via laquelle un utilisateur est propre à sélectionner un type de boisson à préparer/distribuer et avantageusement à saisir des paramètres de réglage de la machine à café 10.

La machine à café 10 comprend également un réservoir d'eau 22 par exemple situé dans une partie arrière du boîtier 12, et un bac de collecte de mouture 24, par exemple situé dans une partie latérale du boîtier 12, configuré pour collecter des galettes de mouture usagées.

La machine à café 10 comporte également une unité de préparation de boissons, non représentée, intégrée au boîtier 12.

L'unité de préparation comprend un circuit de commande pour gérer la réalisation d'une boisson à partir des instructions données par l'utilisateur. L'unité de préparation comprend également une pompe de circulation de liquide, un bloc de chauffe également appelé chaudière produisant de l'eau chaude et/ou de la vapeur et avantageusement une chambre d'infusion configurée pour contenir de la mouture, telle que de la mouture de café ou tout autre produit pulvérulent à infuser.

Dans le mode de réalisation représenté, la machine à café 10 est une machine dite automatique comprenant un bac de grains de café 26 et un moulin intégré, non représenté, propre à moudre les grains de café et à distribuer de la mouture dans la chambre d'infusion.

La machine à café 10 comprend également un dispositif de distribution de lait moussé 28, tel un pot à lait, propre à être connecté à la sortie de distribution d'eau chaude/vapeur 16 et à délivrer du lait moussé dans le récipient lorsque le récipient est positionné sur le support de récipient 18. Le dispositif de distribution de lait moussé 28 comprend par exemple un réservoir de lait 29, un dispositif de moussage de lait 30 et une sortie de distribution de lait moussé 31.

La tête de distribution de boissons 14 est configurée pour être reliée fluidiquement à la chambre d'infusion et pour distribuer hors de l'appareil de préparation de boissons 10 une boisson confectionnée par l'appareil de préparation de boissons 10.

Avantageusement, et comme représenté sur la figure 1, la tête de distribution de boissons 14 comprend deux sorties de distribution 32A, 32B d'une boisson préparée par l'appareil de préparation de boissons.

Le support de récipient 18 est avantageusement amovible par rapport au boîtier 12. Le support de récipient 18 est propre à être déplacé entre une configuration assemblée à la machine à café 10 et notamment au boîtier 12 et une configuration désassemblée du boîtier 12.

Dans la configuration assemblée, le support de récipient 18 est positionné sous la tête de distribution de boissons 14 et est reçu dans un logement 34 délimité par le boîtier 12 de sorte à pouvoir recevoir de l'eau de rinçage de la machine à café et notamment de la tête de distribution de boissons 14 et de l'eau de rinçage/vidange de circuits internes de circulation de liquide de la machine à café 10.

Dans la configuration désassemblée, le support de récipient 18 est séparé du boîtier 12 et propre à être nettoyé et par exemple vidangé dans un évier puis avantageusement passé au lave-vaisselle.

Comme visible plus en détail à la figure 2, le support de récipient 18 comprend une partie de support 36 configurée pour être située au moins en partie en-dessous de la tête de distribution de boissons 14 et un réservoir de collecte 38 configurée pour collecter des eaux usées telles de l'eau de rinçage ou des gouttes de boisson s'écoulant de la tête de distribution de boissons 14 après la réalisation d'une boisson.

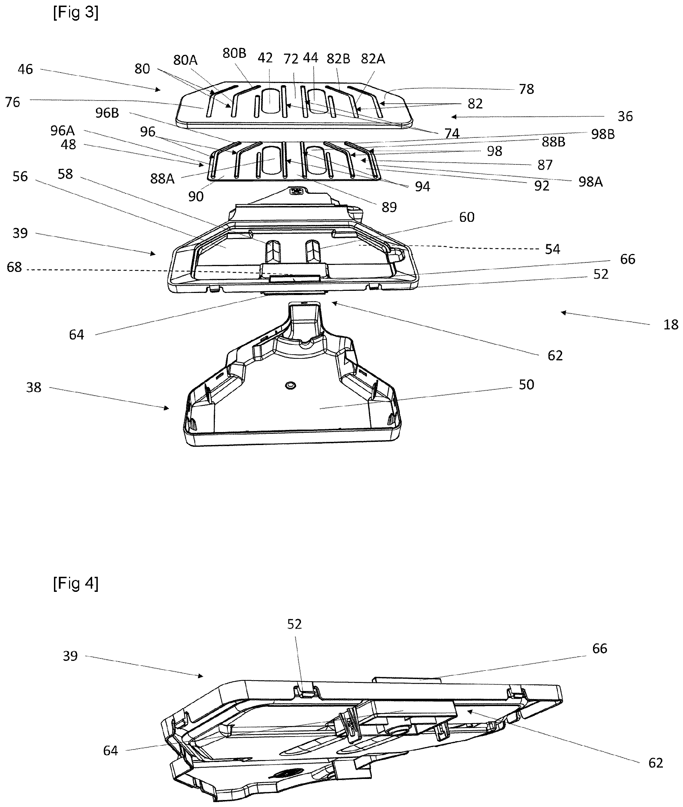

Avantageusement, et comme visible à la figure 3, le support de récipient 18 comprend également un capot 39 propre à être fixé au réservoir de collecte 38.

La partie de support 36 définit une surface de réception 40 configurée pour supporter le récipient et pour être située au moins en partie en-dessous de la tête de distribution de boissons 14 de telle sorte qu'une boisson confectionnée par l'appareil de préparation de boissons 10 est apte à s'écouler par gravité dans le récipient supporté par la partie de support 36.

La partie de support 36 comprend au moins un orifice d'écoulement 42, de préférence deux orifices d'écoulement 42, 44, formés au travers de la partie de support 36 et en communication fluidique avec le réservoir de collecte 38. Les orifices d'écoulement 42, 44 sont destinés à laisser passer de l'eau de rinçage ou des gouttes de boisson s'écoulant par gravité depuis la tête de distribution de boissons 14 vers le réservoir de collecte 38.

Avantageusement, et comme visible à la figure1, les orifices d'écoulement 42, 44 sont situés à l'aplomb des sorties de distribution 32A, 32B.

La partie de support 36 comprend une plaque de support 46 dans laquelle sont ménagés les orifices d'écoulement 42, 44 et un élément de support 48 définissant la surface de réception 40 du récipient et propre à être fixé à la plaque de support 46.

La partie de support 36 est configurée pour être positionnée au-dessus du réservoir de collecte 38.

Le réservoir de collecte 38 est configuré pour être situé au moins en partie en-dessous de la partie de support 36 et pour collecter de l'eau de rinçage et/ou des gouttes de boisson passant à travers chaque orifice d'écoulement 42, 44.

Le réservoir de collecte 38 définit un volume interne 50 de stockage de liquide, notamment d'eaux usées/d'eaux de rinçage et de résidus de boisson.

Le capot 39 est propre à être superposé au réservoir de collecte 38. Avantageusement encore, le capot 39 comprend des clips 52 de fixation au réservoir de collecte 38, positionnés de préférence sur un bord périphérique du capot 39.

Le capot 39 définit un logement central 54 de réception de la partie de support 36 et notamment de la plaque de support 46.

Le capot 39 est propre à être superposé au réservoir de collecte 38 et définit un bac de récupération 56 de l'eau de rinçage et/ou des gouttes de boisson s'écoulant par gravité depuis la tête de distribution de boissons 14. Le bac de récupération 56 est avantageusement configuré pour être en communication fluidique avec le réservoir de collecte 38 et positionnée en dessous des orifices d'écoulement 42, 44.

Avantageusement, comme visible à la figure 3, le bac de récupération 56 comprend un fond muni de reliefs 58, 60 anti-éclaboussures configurés pour être positionnés à l'aplomb de la tête de distribution de boissons 14 et notamment des sorties de distribution 32A, 32B.

Avantageusement encore, comme visible aux figures 3 et 4, le capot 39 comprend un flotteur 62 d'indication du niveau de liquide dans le réservoir de collecte 38.

Le flotteur 62 comprend un corps de flottaison 64 propre à être en contact avec du liquide contenu dans le volume interne 50 et une saillie axiale 66 s'étendant vers le haut depuis le corps de flottaison 64. La saillie axiale 66 est configurée pour traverser le capot 39 au niveau d'une ouverture traversante 68 ménagée dans le capot 39. Le flotteur 62 et notamment la saillie axiale 66 est mobile par rapport au capot 39 entre une position basse et une position surélevée en fonction de la quantité de liquide dans le réservoir de collecte 38.

En position surélevée la saillie axiale 66 dépasse du capot 39 et notamment d'une face supérieure du capot 39 et est visible par l'utilisateur afin de lui indiquer le niveau de liquide dans le réservoir de collecte 38.

En position basse la saillie axiale est positionnée sous la face supérieure du capot 39.

Avantageusement, l'ouverture traversante est positionnée à l'avant du capot 39.

La surface de réception du récipient 40 et donc l'élément de support 48 est en un matériau configuré pour assurer un maintien du récipient en position sur la surface de réception 40 lors du fonctionnement de la pompe, notamment lors de la distribution/préparation de boissons. En d'autres termes, la surface de réception du récipient 40 et donc l'élément de support 48 est en un matériau configuré pour empêcher un déplacement du récipient sur la surface de réception 40 lors du fonctionnement de la pompe. En d'autres termes encore, le matériau de la surface de réception garanti une adhérence entre le récipient et la partie de support qui empêche tout déplacement du récipient lorsqu'il est positionné sur la surface de réception et que la pompe est en fonctionnement.

Avantageusement, la surface de réception 40 est en matériau dont le coefficient de frottement statique avec le récipient est supérieur à 1, de préférence supérieur à 2, de préférence encore supérieur à 3.

La surface de réception 40 et notamment l'élément de support 48 est par exemple en matériau élastomère, de préférence en élastomère silicone.

Une telle configuration permet de garantir une immobilisation du récipient en dessous de la tête de distribution de boissons 14 lors de la distribution de la boisson. On entend par distribution de la boisson dans ce paragraphe l'ensemble des étapes nécessaires à la réalisation de la boisson puis à son acheminement jusqu'au récipient.

Avantageusement, l'élément de support 48 est fixé de manière amovible à la plaque de support 46.

La plaque de support 46 est par exemple une grille métallique.

La plaque de support 46 est propre à être superposée au capot 39 au niveau du logement central 54. Plus précisément, la plaque de support 46 équipée de l'élément de support 48 est propre à être positionnée au niveau du logement central 54 en configuration d'utilisation de la machine à café 10.

La plaque de support 46 comprend au moins un logement traversant 74, 80, 82.

De préférence, la plaque de support 46 comprend une pluralité de logements traversants 74, 80, 82.

La plaque de support 46 est sensiblement plane et s'étend dans un plan définit par un axe longitudinal X1 et un axe transversal Y1.

La plaque de support 46 comprend notamment une zone centrale 72 muni d'un premier groupe de logements traversants 74 s'étendant parallèlement à l'axe transversal Y1.

La plaque de support 46 comprend également deux zones latérales 76, 78 opposées, disposées de part et d'autre de la zone centrale selon l'axe longitudinal X1. Les zones latérales 76, 78 sont munies chacune d'un deuxième groupe de logements traversants 80, 82 respectif comprenant successivement, selon l'axe transversal, une première portion 80A, 82A s'étendant parallèlement à l'axe transversal Y1 et une deuxième portion 80B, 82B inclinée par rapport à la première portion 80A, 82A.

Pour chaque logement traversant 80, 82 du deuxième groupe, la deuxième portion 80B, 82B s'étend entre une extrémité de liaison à la première portion 80A, 82A et une deuxième extrémité libre qui est plus proche de la zone centrale 72 que la première portion 80A, 82A.

Chaque deuxième portion 80B, 82B est par exemple inclinée d'un angle compris entre 25° et 65°, de préférence entre 30° et 50° par rapport à la première portion 80A, 82A correspondante.

Avantageusement, les orifices d'écoulement 42, 44 sont positionnés de part et d'autre des logements traversants 74 du premier groupe selon l'axe longitudinal X1.

L'élément de support 48 comprend au moins une nervure axiale 94, 96, 98 correspondante pour chaque logement traversant 74, 80, 82 propre à être reçue dans ledit logement traversant 74, 80, 82 correspondant.

L'élément de support 48 comprend une partie de liaison 87 sensiblement plane sur laquelle est formée chaque nervure axiale 94, 96, 98.

Chaque nervure axiale 94, 96, 98 s'étend par exemple vers le haut depuis une face supérieure de la partie de liaison 87.

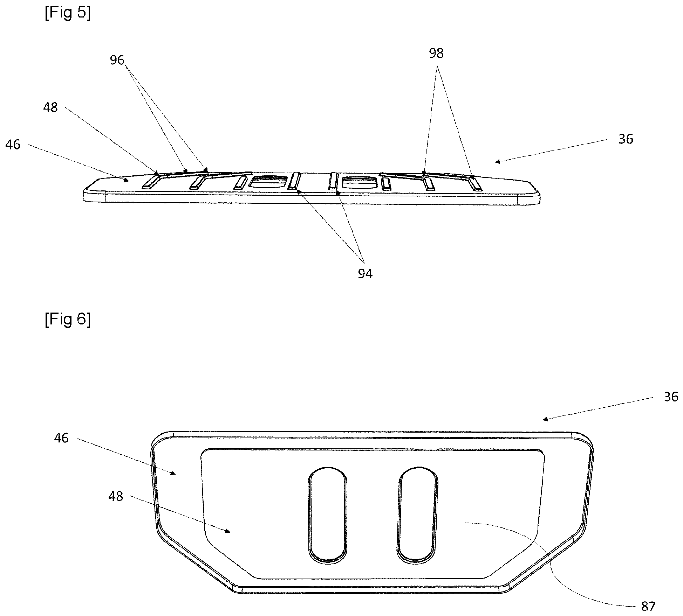

Comme visible à la figure 6, la face inférieure de la partie de liaison 87 est par exemple dépourvue de nervure et est notamment plane.

Avantageusement, la partie de liaison 87 comprend des orifices traversants 88A, 88B destinés à être positionnés en regard des orifices d'écoulement 42, 44 lorsque l'élément de support 48 est fixé à la plaque de support 46.

Lorsque l'élément de support 48 est fixé à la plaque de support 46, la partie de liaison 87 s'étend sensiblement parallèlement à la plaque de support 46 et donc selon un axe longitudinal et un axe transversal parallèles respectivement à l'axe longitudinal X1 et l'axe transversal Y1 et avantageusement sensiblement confondus avec l'axe longitudinal X1 et l'axe transversal Y1.

La partie de liaison 87 est configurée pour être positionnée sous la plaque de support 46 et pour être mise en contact avec une face inférieure de la plaque de support 46.

Chaque nervure axiale 94, 96, 98 s'étend selon une direction verticale en saillie de la partie de liaison 87 vers le haut, c'est-à-dire selon un axe vertical perpendiculaire à l'axe transversal Y1 et l'axe longitudinal X1.

Avantageusement, l'élément de support 48 comprend plusieurs nervures axiales 94, 96, 98. L'élément de support 48 comprend notamment une partie centrale 89 et deux parties latérales 90, 92 opposées situées de part et d'autre de la partie centrale selon l'axe longitudinal X1.

La partie centrale 89 comprend un premier groupe de nervures axiales 94 s'étendant parallèlement à l'axe transversal Y1.

Les parties latérales 90, 92 sont munies chacune d'un deuxième groupe de nervures axiales 96, 98 respectif comprenant successivement, selon l'axe transversal, une première portion 96A, 98A s'étendant parallèlement à l'axe transversal Y1 et une deuxième portion 96B, 98B inclinée par rapport à la première portion 96A, 98A.

Pour chaque nervure axiale 96, 98 du deuxième groupe, la deuxième portion 96B, 98B s'étend entre une extrémité de liaison à la première portion 96A, 98A et une deuxième extrémité libre qui est plus proche de la partie centrale 89 que la première portion 96A, 98A.

Chaque deuxième portion 96B, 98B est par exemple inclinée d'un angle compris entre 25° et 65°, de préférence entre 30° et 50° par rapport à la première portion 96A, 98A correspondante.

Chaque deuxième portion 96B, 98B est plus proche, suivant l'axe transversal Y1, de la tête de distribution de boissons 14 et notamment d'une face avant de la machine à café 10, que la première portion 96A, 98A correspondante.

Chaque nervure axiale 94, 96, 98 est configurée pour traverser le logement traversant 74, 80, 82 correspondant et former la surface de réception 40 du récipient lorsque l'élément de support 48 est fixé à la plaque de support 46.

Chaque nervure axiale 94, 96, 98 est propre à coopérer par coopération de forme avec le logement traversant 74, 80, 82 correspondant pour fixer l'élément de support 48 à la plaque de support 46. Chaque nervure axiale 94, 96, 98 a par exemple une largeur mesurée suivant l'axe longitudinal Y1 supérieure à celle du logement traversant 74, 80, 82 correspondant.

Avantageusement, chaque nervure axiale 94, 96, 98 est configurée pour boucher de manière étanche le logement traversant 74, 80, 82 correspondant de sorte qu'aucun liquide ne puisse traverser ledit logement traversant. Une telle configuration améliore la propreté de la partie de support 36.

Chaque nervure axiale 94, 96, 98 est configurée pour dépasser axialement, selon la direction verticale, de la plaque de support 46 et notamment du logement traversant 74, 80, 82 correspondant lorsque l'élément de support 48 est fixé à la plaque de support 46. Les nervures axiales 94, 96, 98 et notamment leurs extrémités supérieures définissent ainsi une aire/surface de réception 40 du récipient surélevée par rapport à la plaque de support 46.

Une telle configuration est plus clairement visible à la figure 5 où les nervures axiales 94, 96, 98 dépassent verticalement des logements traversants 74, 80, 82 et notamment d'une face supérieure de la plaque de support 46.

Ainsi, l'élément de support 48 assure à la fois une fonction de maintien en position du récipient à l'aplomb de la tête de distribution 14 et/ou de la sortie de distribution de lait moussé 31 et une fonction de protection de la plaque de support 46 contre les rayures. De plus, l'élément de support 48 a une fonction de réduction de bruit lié à d'éventuels mouvements du récipient sur le support de récipient 46. Ensemble, l'élément de support 48 et la plaque de support 46 améliore la qualité perçue par l'utilisateur.

Avantageusement, l'élément de support 48 comprend au niveau de la partie de liaison 87 et notamment sur un bord extérieur de la partie de liaison une languette de préhension non représentée propre à être saisie par l'utilisateur pour séparer l'élément de support 48 de la plaque de support 46.

En variante, la partie de liaison 87 est propre à être mise en contact avec la face supérieure de la plaque de support 46 et la face inférieure plane de la partie de liaison 87 visible à la figure 6 forme alors la surface de réception de récipient.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Appareil de préparation de boissons (10) comprenant :
- une pompe de circulation de liquide,
- une chambre d'infusion configurée pour contenir de la mouture, telle que de la mouture de café ou tout autre produit pulvérulent à infuser,
- une tête de distribution de boissons (14) configurée pour être reliée fluidiquement à la chambre d'infusion et par laquelle une boisson confectionnée par l'appareil de préparation de boissons (10) est apte à s'écouler hors de l'appareil de préparation de boissons (10),
- un support de récipient (18), le support de récipient (18) comportant :
+ une partie de support (36) définissant une surface de réception (40) d'un récipient configurée pour supporter le récipient et pour être située au moins en partie en-dessous de la tête de distribution de boissons (14), de telle sorte qu'une boisson confectionnée par l'appareil de préparation de boissons (10) est apte à s'écouler par gravité dans le récipient supporté par la partie de support (36), et
+ un réservoir de collecte (38) configuré pour être situé au moins en partie en-dessous de la partie de support (36) et pour collecter de l'eau de rinçage et/ou des gouttes de boisson s'écoulant par gravité depuis la tête de distribution de boissons (14) et passant à travers au moins un orifice d'écoulement (42, 44) formé au travers de la partie de support (36),
**caractérisé en ce que** la surface de réception (40) du récipient est en un matériau configuré pour assurer un maintien du récipient en position sur la surface de réception (40) lors du fonctionnement de la pompe.

2. Appareil de préparation de boissons (10) selon la revendication 1, **caractérisé en ce que** la surface de réception (40) est en matériau dont le coefficient de frottement statique avec le récipient est supérieur à 1, de préférence supérieur à 2 de préférence encore supérieur à 3.

3. Appareil de préparation de boissons (10) selon la revendication 1 ou 2, **caractérisé en ce que** la surface de réception (40) est en matériau élastomère.

4. Appareil de préparation de boissons (10) selon l'une quelconque des revendications 1 à 3, **caractérisé en ce que** la partie de support (36) comprend une plaque de support (46) dans laquelle est ménagé chaque orifice d'écoulement (42, 44), et un élément de support (48) formant la surface de réception (40) et propre à être fixé à la plaque de support (46).

5. Appareil de préparation de boissons (10) selon la revendication 4, **caractérisé en ce que** l'élément de support (48) est fixé de manière amovible à la plaque de support (46).

6. Appareil de préparation de boissons (10) selon la revendication 4 ou 5, **caractérisé en ce que** la plaque de support (46) comprend au moins un logement traversant (74, 80, 82) et **en ce que** l'élément de support (48) comprend au moins une nervure axiale (94, 96, 98) correspondante pour chaque logement traversant (74, 80, 82) propre à être reçue dans ledit logement traversant (74, 80, 82).

7. Appareil de préparation de boissons (10) selon la revendication 6, **caractérisé en ce que** chaque nervure axiale (94, 96, 98) est propre à coopérer par coopération de forme avec le logement traversant (74, 80, 82) correspondant pour fixer l'élément de support (48) à la plaque de support (46).

8. Appareil de préparation de boissons (10) selon la revendication 6 ou 7, **caractérisé en ce que** l'élément de support (48) comprend une partie de liaison (87) sensiblement plane sur laquelle est formée chaque nervure axiale (94, 96, 98), **en ce que** la partie de liaison (87) est configurée pour être positionnée sous la plaque de support (46), et **en ce que** chaque nervure axiale (94, 96, 98) est configurée pour traverser le logement traversant (74, 80, 82) correspondant et former la surface de réception (40) lorsque l'élément de support (48) est fixé à la plaque de support (46).

9. Appareil de préparation de boissons (10) selon la revendication 8, caractérisé en ce chaque nervure axiale (94, 96, 98) est configurée pour dépasser axialement de la plaque de support (46) et notamment du logement traversant (74, 80, 82) correspondant lorsque l'élément de support (48) est fixé à la plaque de support (46) de sorte à définir une aire de réception du récipient surélevée par rapport à la plaque de support (46).

10. Appareil de préparation de boissons (10) selon l'une quelconque des revendications 6 à 9, **caractérisé en ce que** l'élément de support (48) comprend plusieurs nervures axiales (94, 96, 98), et **en ce que** l'élément de support (48) comprend :
- une partie centrale (89) comprenant un premier groupe de nervures axiales (94) s'étendant parallèlement à un axe transversal (Y1) de l'élément de support (48), et
- deux parties latérales (90, 92) opposées comprenant un deuxième groupe de nervures axiales (96, 98) comprenant successivement, selon l'axe transversal (Y1), une première portion (96A, 98A) s'étendant parallèlement à l'axe transversal (Y1) et une deuxième portion (96B, 98B) inclinée par rapport à la première portion (96A, 98A) et dont une extrémité libre est plus proche de la partie centrale (89) que la première portion.

11. Appareil de préparation de boissons (10) selon l'une quelconque des revendications 4 à 10, **caractérisé en ce que** le support de récipient (18) comprend un capot (39) propre à être fixé au réservoir de collecte (38) et définissant un logement central (54) de réception de la plaque de support (46).

12. Appareil de préparation de boissons (10) selon la revendication 11, **caractérisé en ce que** le capot (39) est propre à être superposé au réservoir de collecte (38) et définit un bac de récupération (56) de l'eau de rinçage et/ou des gouttes de boisson s'écoulant par gravité depuis la tête de distribution de boissons (14), le bac de récupération (56) étant propre à être en communication fluidique avec le réservoir de collecte (38), et **en ce que** la plaque de support (46) est propre à être superposée au capot (39) au niveau du logement central (54).

13. Appareil de préparation de boissons (10) selon l'une quelconque des revendications 4 à 12, **caractérisé en ce que** l'élément de support (48) comprend une languette de préhension propre à être saisie par l'utilisateur pour séparer l'élément de support (48) de la plaque de support (46).

14. Appareil de préparation de boissons (10) selon l'une quelconque des revendications précédentes, **caractérisé en ce que** l'appareil de préparation de boissons (10) comprend une sortie de distribution d'eau chaude/vapeur (16) et un dispositif de distribution de lait moussé (28) propre à être connecté à la sortie de distribution d'eau chaude/vapeur (16) et à délivrer du lait moussé dans le récipient lorsque le récipient est positionné sur la surface de réception (40).
